# EUROPEAN PATENT APPLICATION

(11) **EP 4 626 064 A1**
(43) Date of publication of application: **01.10.2025**
(21) Application number: 23909474.1
(22) Date of filing: 13.10.2023
(51) Int. Cl.: H04W 24/04

(54) **METHOD FOR LOCATING FAULT CAUSE, AND APPARATUS**

(30) Priority: 26.12.2022 CN 202211678856
(71) Applicant: Huawei Technologies Co., Ltd., Shenzhen, Guangdong 518129 (CN)
(72) Inventor: LI, Yexing, Shenzhen, Guangdong 518129 (CN); YU, Yijun, Shenzhen, Guangdong 518129 (CN)
(74) Representative: Gill Jennings & Every LLP
(86) International application number: PCT/CN2023/124534
(87) International publication number: WO 2024/139540

(57) **Abstract**

A method and an apparatus for locating a fault cause are provided. The method includes: A cross-domain management device receives first association information from a first domain management device, where the first association information is used to determine that a dependent fault of a first fault that occurs in a first network domain occurs in a second network domain, and the first domain management device is a management device of the first network domain; and sends first location request information to a second domain management device based on the first association information, where the first location request information includes information used to determine a dependent fault, the first location request information is used to request to locate a fault cause of the dependent fault, and the second domain management device is a management device of the second network domain. **In** this way, the first association information may associate faults in different domains, so that precise cross-domain fault cause location can be implemented, thereby improving efficiency of locating the fault cause.

## Description

### CROSS-REFERENCE TO RELATED APPLICATIONS

This application claims priority to Chinese Patent Application No. 202211678856.5, filed with the China National Intellectual Property Administration on December 26, 2022 and entitled "METHOD AND APPARATUS FOR LOCATING FAULT CAUSE", which is incorporated herein by reference in its entirety.

### TECHNICAL FIELD

This application relates to the field of communication technologies, and in particular, to a method and an apparatus for locating a fault cause.

### BACKGROUND

When a fault occurs in a wireless network, network performance is usually directly affected and services are even interrupted. Therefore, fast fault detection and troubleshooting are one of main challenges for network operation and maintenance. The wireless network may be a multi-domain network including a radio access network, a transport network, and a core network. The radio access network may include a radio access network element, user equipment, and the like. The core network may include a core network element. The transport network may include a transmission device such as a switch or a router. The transport network, the core network, and the radio access network are different service networks, and each service network may be referred to as a network domain.

When a fault occurs in any domain in the multi-domain network, a cross-domain management device may send a fault information collection request to a domain management device in each domain, where the fault information collection request may include fault occurrence time. The domain management device in each domain may report, based on the fault occurrence time, fault information generated in a time period corresponding to the fault occurrence time, and the like, so that the cross-domain management device may locate a fault cause based on the fault information reported by the domain management device in each domain.

However, because there is an association relationship between a plurality of domains in the multi-domain network, when a fault occurs in any domain, a series of fault information may be generated in each domain. A large amount of fault information causes the cross-domain management device to process a large amount of data when the cross-domain management device determines the fault cause, causing low efficiency of locating the fault cause.

### SUMMARY

This application provides a method and an apparatus for locating a fault cause, to improve efficiency of locating the fault cause.

According to a first aspect, an embodiment of this application provides a method for locating a fault cause. The method may be applied to a cross-domain management device or a component (for example, a circuit or a chip) in the cross-domain management device. For example, the method is applied to the cross-domain management device. In the method, the cross-domain management device receives first association information from a first domain management device, where the first association information is used to determine that a dependent fault of a first fault that occurs in a first network domain occurs in a second network domain, and the first domain management device is a management device of the first network domain; and sends first location request information to a second domain management device based on the first association information, where the first location request information includes information used to determine the dependent fault, the first location request information is used to request to locate a fault cause of the dependent fault, and the second domain management device is a management device of the second network domain.

The foregoing method is used, so that the first domain management device may send the first association information to the cross-domain management device, and the cross-domain management device determines, based on the first association information, that the dependent fault of the first fault that occurs in the first network domain occurs in the second network domain, and sends location request information to the second domain management device in a targeted manner. In this way, the first association information may associate faults in different domains, so that precise cross-domain fault cause location can be implemented. Compared with a manner in which the cross-domain management device locates a fault cause based on fault information reported by each domain management device, this can effectively improve efficiency of locating the fault cause.

In a possible design, the method further includes: sending second location request information to the first domain management device, where the second location request information is used to request to locate the fault cause.

In a possible design, the second location request information includes an identifier of a second fault that occurs in the first network domain, and the first fault and the second fault are located in a same fault propagation chain.

In a possible design, the second location request information further includes fault occurrence time information, the fault occurrence time information is used to determine a first time period, and the first fault is a fault that occurs in the first time period.

In a possible design, the method further includes: sending first indication information to the first domain management device, where the first indication information indicates to report the first association information when the fault cause is not located by the first domain management device.

In a possible design, the method further includes: sending second indication information to the second domain management device, where the second indication information indicates to report second association information when the fault cause is not located by the second domain management device.

In a possible design, the method further includes: receiving a location result from the second domain management device, where the location result includes any one of the following: the fault cause, the second association information, and location failure information, where the location failure information indicates that the fault cause is not located, and the second association information does not exist.

In a possible design, the first fault indicates that a first abnormal event occurs on a first network element of the first network domain; and the dependent fault indicates that a dependent event of the first abnormal event occurs on an associated network element of the first network element, and the associated network element is a network element of the second network domain.

In a possible design, the first association information includes at least one of the following: information about the first abnormal event; information about the dependent event; an identifier of the first network element; an identifier of the associated network element; and an identifier of the dependent fault.

In a possible design, the first location request information includes at least one of the following: the information about the first abnormal event; the information about the dependent event; the identifier of the first network element; the identifier of the associated network element; and the identifier of the dependent fault.

According to a second aspect, an embodiment of this application provides a method for locating a fault cause. The method may be applied to a domain management device or a component (for example, a circuit or a chip) in the domain management device.

Case 1: For example, the method is applied to a first domain management device (where the first domain management device is a management device of a first network domain). In the method, the first domain management device determines first association information, and sends the first association information to a cross-domain management device, where the first association information is used to determine that a dependent fault of a first fault that occurs in the first network domain occurs in a second network domain, so that the cross-domain management device sends first location request information to a second domain management device, where the first location request information includes information used to determine the dependent fault, the first location request information is used to request to locate a fault cause of the dependent fault, and the second domain management device is a management device of the second network domain.

In a possible design, the method further includes: receiving second location request information from the cross-domain management device, where the second location request information is used to request to locate the fault cause.

In a possible design, the second location request information includes an identifier of a second fault that occurs in the first network domain, and the first fault and the second fault are located in a same fault propagation chain.

In a possible design, the second location request information further includes fault occurrence time information, the fault occurrence time information is used to determine a first time period, and the first fault is a fault that occurs in the first time period.

In a possible design, the method further includes: receiving first indication information from the cross-domain management device, where the first indication information indicates to report the first association information when the fault cause is not located by the first domain management device.

In a possible design, the first fault indicates that a first abnormal event occurs on a first network element of the first network domain; and the dependent fault indicates that a dependent event of the first abnormal event occurs on an associated network element of the first network element, and the associated network element is a network element of the second network domain.

In a possible design, the first association information includes at least one of the following: information about the first abnormal event; information about the dependent event; an identifier of the first network element; an identifier of the associated network element; and an identifier of the dependent fault.

Case 2: For example, the method is applied to a second domain management device. In the method, the second domain management device receives first location request information from a cross-domain management device, and locates, based on the first location request information, a fault cause of a fourth fault that occurs in a second network domain, where the second domain management device is a management device of the second network domain, and the fourth fault is a dependent fault of a first fault that occurs in a first network domain.

In a possible design, the method further includes: receiving second indication information from the cross-domain management device, where the second indication information indicates to report second association information when the fault cause is not located by the second domain management device.

In a possible design, the first fault indicates that a first abnormal event occurs on a first network element of the first network domain; and the dependent fault indicates that a dependent event of the first abnormal event occurs on an associated network element of the first network element, and the associated network element is a network element of the second network domain.

In a possible design, the first location request information includes at least one of the following: the information about the first abnormal event; the information about the dependent event; the identifier of the first network element; the identifier of the associated network element; and the identifier of the dependent fault.

In a possible design, the method further includes: sending a location result to the cross-domain management device, where the location result includes any one of the following: the fault cause; the second association information; and location failure information, where the location failure information indicates that the fault cause is not located, and the second association information does not exist.

It may be understood that the method described in the second aspect corresponds to the method described in the first aspect. For beneficial effects of related technical features in the second aspect, refer to the descriptions of the first aspect. Details are not described.

According to a third aspect, an embodiment of this application provides a method for locating a fault cause. The method includes: A first domain management device sends first association information to a cross-domain management device, where the first association information is used to determine that a dependent fault of a first fault that occurs in a first network domain occurs in a second network domain, and the first domain management device is a management device of the first network domain. The cross-domain management device receives the first association information, and sends first location request information to a second domain management device based on the first association information, where the first location request information includes information used to determine the dependent fault, the first location request information is used to request to locate a fault cause of the dependent fault, and the second domain management device is a management device of the second network domain. The second domain management device receives the first location request information, and sends a location result to the cross-domain management device based on the first location request information.

In a possible design, the method further includes: The cross-domain management device sends second location request information to the first domain management device, where the second location request information is used to request to locate the fault cause.

In a possible design, the method further includes: The cross-domain management device sends first indication information to the first domain management device, where the first indication information indicates to report the first association information when the fault cause is not located by the first domain management device.

In a possible design, the method further includes: The cross-domain management device sends second indication information to the second domain management device, where the second indication information indicates to report second association information when the fault cause is not located by the second domain management device.

In a possible design, the method further includes: The second domain management device sends the location result to the cross-domain management device, where the location result includes any one of the following: the fault cause, the second association information, and location failure information, where the location failure information indicates that the fault cause is not located, and the second association information does not exist.

According to a fourth aspect, an embodiment of this application provides a system for locating a fault cause. The system may include a cross-domain management device, a first domain management device, and a second domain management device. The first domain management device is configured to send first association information to the cross-domain management device, where the first association information is used to determine that a dependent fault of a first fault that occurs in a first network domain occurs in a second network domain, and the first domain management device is a management device of the first network domain. The cross-domain management device is configured to receive the first association information, and send first location request information to the second domain management device based on the first association information, where the first location request information includes information used to determine the dependent fault, the first location request information is used to request to locate a fault cause of the dependent fault, and the second domain management device is a management device of the second network domain. The second domain management device is configured to receive the first location request information, and send a location result to the cross-domain management device based on the first location request information.

In a possible design, the cross-domain management device is further configured to send second location request information to the first domain management device, where the second location request information is used to request to locate the fault cause.

In a possible design, the cross-domain management device is further configured to send first indication information to the first domain management device, where the first indication information indicates to report the first association information when the fault cause is not located by the first domain management device.

In a possible design, the cross-domain management device is further configured to send second indication information to the second domain management device, where the second indication information indicates to report second association information when the fault cause is not located by the second domain management device.

In a possible design, the second domain management device is further configured to send the location result to the cross-domain management device, where the location result includes any one of the following: the fault cause, the second association information, and location failure information, where the location failure information indicates that the fault cause is not located, and the second association information does not exist.

According to a fifth aspect, this application provides an apparatus for locating a fault cause. The apparatus may be a cross-domain management device, and the apparatus has a function of implementing the first aspect. For example, the communication apparatus includes a corresponding module, unit, or means (means) for performing the operation in the first aspect. The module, unit, or means may be implemented by software, may be implemented by hardware, or may be implemented by hardware executing corresponding software.
(1) In a possible design, the apparatus includes a processing module and a communication module. The communication module may be configured to send and receive a signal, to implement communication between the apparatus and another apparatus. The processing module may be configured to perform some internal operations of the apparatus.

Specifically, in an embodiment, the communication module is configured to: receive first association information from a first domain management device, where the first association information is used to determine that a dependent fault of a first fault that occurs in a first network domain occurs in a second network domain, and the first domain management device is a management device of the first network domain; and send first location request information to a second domain management device based on the first association information, where the first location request information includes information used to determine the dependent fault, the first location request information is used to request to locate a fault cause of the dependent fault, and the second domain management device is a management device of the second network domain.

In a possible implementation of this embodiment, the communication module is further configured to send second location request information to the first domain management device, where the second location request information is used to request to locate the fault cause.

In a possible implementation of this embodiment, the second location request information includes an identifier of a second fault that occurs in the first network domain, and the first fault and the second fault are located in a same fault propagation chain.

In a possible implementation of this embodiment, the second location request information further includes fault occurrence time information, the fault occurrence time information is used to determine a first time period, and the first fault is a fault that occurs in the first time period.

In a possible implementation of this embodiment, the communication module is further configured to send first indication information to the first domain management device, where the first indication information indicates to report the first association information when the fault cause is not located by the first domain management device.

In a possible implementation of this embodiment, the communication module is further configured to send second indication information to the second domain management device, where the second indication information indicates to report second association information when the fault cause is not located by the second domain management device.

In a possible implementation of this embodiment, the communication module is further configured to receive a location result from the second domain management device, where the location result includes any one of the following: the fault cause, the second association information, and location failure information, where the location failure information indicates that the fault cause is not located, and the second association information does not exist.

In a possible implementation of the embodiment, the first fault indicates that a first abnormal event occurs on a first network element of the first network domain; and the dependent fault indicates that a dependent event of the first abnormal event occurs on an associated network element of the first network element, and the associated network element is a network element of the second network domain.

In a possible implementation of this embodiment, the first association information includes at least one of the following: information about the first abnormal event; information about the dependent event; an identifier of the first network element; an identifier of the associated network element; and an identifier of the dependent fault.

In a possible implementation of this embodiment, the first location request information includes at least one of the following: the information about the first abnormal event; the information about the dependent event; the identifier of the first network element; the identifier of the associated network element; and the identifier of the dependent fault.

(2) In a possible design, the communication apparatus includes a processor, and the processor may be configured to be coupled to a memory. The memory may store a computer program or instructions necessary for implementing the functions in the first aspect. The processor may execute the computer program or the instructions stored in the memory. When the computer program or the instructions is/are executed, the communication apparatus is enabled to implement the method according to any one of the possible designs or implementations of the first aspect.

(3) In a possible design, the communication apparatus includes a processor and a memory. The memory may store a computer program or instructions necessary for implementing the functions in the first aspect. The processor may execute the computer program or the instructions stored in the memory. When the computer program or the instructions is/are executed, the communication apparatus is enabled to implement the method according to any one of the possible designs or implementations of the first aspect.

(4) In a possible design, the communication apparatus includes a processor and an interface circuit. The processor is configured to communicate with another apparatus through the interface circuit, and perform the method according to any one of the possible designs or implementations of the first aspect.

According to a sixth aspect, this application provides an apparatus for locating a fault cause. The apparatus may be a domain management device, and the apparatus has a function of implementing the second aspect. For example, the communication apparatus includes a corresponding module, unit, or means for performing the operation in the second aspect. The module, unit, or means may be implemented by software, may be implemented by hardware, or may be implemented by hardware executing corresponding software.
(1) In a possible design, the apparatus includes a processing module and a communication module. The communication module may be configured to send and receive a signal, to implement communication between the apparatus and another apparatus. The processing module may be configured to perform some internal operations of the apparatus.

Specifically, in an embodiment, the processing module is configured to determine first association information; and the communication module is configured to send the first association information to a cross-domain management device, where the first association information is used to determine that a dependent fault of a first fault that occurs in a first network domain occurs in a second network domain, so that the cross-domain management device sends first location request information to a second domain management device, where the first location request information includes information used to determine the dependent fault, the first location request information is used to request to locate a fault cause of the dependent fault, and the second domain management device is a management device of the second network domain.

In a possible implementation of this embodiment, the communication module is further configured to receive second location request information from the cross-domain management device, where the second location request information is used to request to locate the fault cause.

In a possible implementation of this embodiment, the second location request information includes an identifier of a second fault that occurs in the first network domain, and the first fault and the second fault are located in a same fault propagation chain.

In a possible implementation of this embodiment, the second location request information further includes fault occurrence time information, the fault occurrence time information is used to determine a first time period, and the first fault is a fault that occurs in the first time period.

In a possible implementation of this embodiment, the communication module is further configured to receive first indication information from the cross-domain management device, where the first indication information indicates to report the first association information when the fault cause is not located by the first domain management device.

In a possible implementation of the embodiment, the first fault indicates that a first abnormal event occurs on a first network element of the first network domain; and the dependent fault indicates that a dependent event of the first abnormal event occurs on an associated network element of the first network element, and the associated network element is a network element of the second network domain.

In a possible implementation of this embodiment, the first association information includes at least one of the following: information about the first abnormal event; information about the dependent event; an identifier of the first network element; an identifier of the associated network element; and an identifier of the dependent fault.

(2) In a possible design, the communication apparatus includes a processor, and the processor may be configured to be coupled to a memory. The memory may store a computer program or instructions necessary for implementing the functions in the second aspect. The processor may execute the computer program or the instructions stored in the memory. When the computer program or the instructions is/are executed, the communication apparatus is enabled to implement the method according to any one of the possible designs or implementations of the second aspect.

(3) In a possible design, the communication apparatus includes a processor and a memory. The memory may store a computer program or instructions necessary for implementing the functions in the second aspect. The processor may execute the computer program or the instructions stored in the memory. When the computer program or the instructions is/are executed, the communication apparatus is enabled to implement the method according to any one of the possible designs or implementations of the second aspect.

(4) In a possible design, the communication apparatus includes a processor and an interface circuit. The processor is configured to communicate with another apparatus through the interface circuit, and perform the method according to any one of the possible designs or implementations of the second aspect.

It may be understood that in the fifth aspect and the sixth aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated on one chip, or may be disposed on different chips. A type of the memory and a manner in which the memory and the processor are disposed are not limited in this embodiment of this application.

According to a seventh aspect, this application provides a computer-readable storage medium. The computer storage medium stores computer-readable instructions. When a computer reads and executes the computer-readable instructions, the computer is enabled to perform the method according to any one of the possible designs of the first aspect or the second aspect.

According to an eighth aspect, this application provides a computer program product. When a computer reads and executes the computer program product, the computer is enabled to perform the method according to any one of the possible designs of the first aspect or the second aspect.

According to a ninth aspect, this application provides a chip. The chip includes a processor. The processor is coupled to a memory, and is configured to read and execute a software program stored in the memory, to implement the method according to any one of the possible designs of the first aspect or the second aspect.

### BRIEF DESCRIPTION OF DRAWINGS

FIG. 1 is a diagram of a communication system applicable to an embodiment of this application;
FIG. 2 is a diagram of a fault propagation chain according to an embodiment of this application;
FIG. 3 is a schematic flowchart of locating a fault cause according to an embodiment of this application;
FIG. 4 is a schematic flowchart corresponding to a method for locating a fault cause according to Embodiment 1 of this application;
FIG. 5 is a diagram of a fault propagation chain according to an embodiment of this application;
FIG. 6 is a schematic flowchart corresponding to a method for locating a fault cause according to Embodiment 2 of this application;
FIG. 7 is a diagram of a fault propagation chain according to an embodiment of this application;
FIG. 8 is a schematic flowchart corresponding to a method for locating a fault cause according to Embodiment 3 of this application;
FIG. 9 is a schematic flowchart corresponding to a method for locating a fault cause according to Embodiment 4 of this application;
FIG. 10 is a possible example block diagram of an apparatus according to an embodiment of this application; and
FIG. 11 is a possible diagram of a structure of an apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a fourth generation (4th generation, 4G) mobile communication system, such as a long term evolution (long term evolution, LTE) system, a fifth generation (5th generation, 5G) mobile communication system, such as a new radio (new radio, NR) system, and a future evolved communication system, such as a sixth generation (6th generation, 6G) mobile communication system, and the like.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

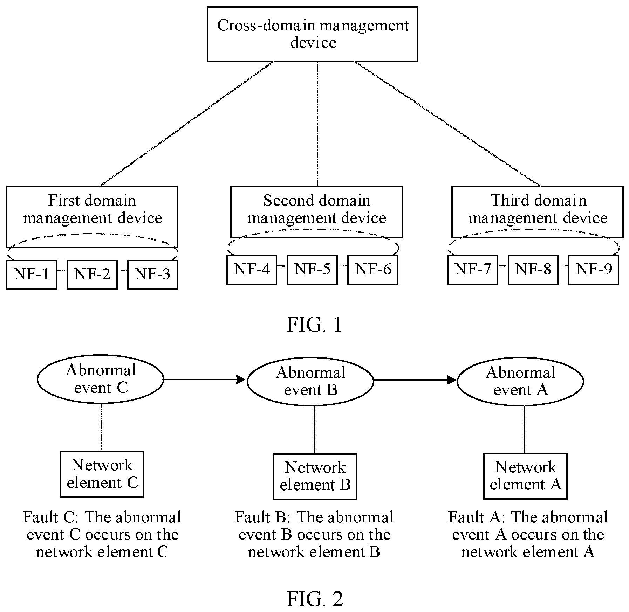

For ease of understanding embodiments of this application, a communication system shown in **FIG. 1** is first used as an example to describe in detail a communication system applicable to embodiments of this application. The communication system shown in FIG. 1 may also be referred to as a network management system or a system for locating a fault cause. As shown in FIG. 1, the system may include a cross-domain management device and a plurality of domain management devices (for example, a first domain management device, a second domain management device, and a third domain management device).

Each of the plurality of domain management devices may manage one network domain. One network domain may include one or more network functions (network functions, NFs). The NF may also be referred to as a network element, a network site, a network node, or the like. This is not specifically limited. For example, the first domain management device is a management device of a first network domain, and the first network domain may include an NF-1, an NF-2, an NF-3, and the like. The second domain management device is a management device of a second network domain, and the second network domain may include an NF-4, an NF-5, an NF-6, and the like. The third domain management device is a management device of a third network domain, and the third network domain may include an NF-7, an NF-8, an NF-9, and the like.

### (1) Cross-domain management device

The cross-domain management device may also be referred to as a network management system (network management system, NMS), a network management function (network management function, NMF) device, a network slice management function (network slice management function, NSMF) device, a cross-domain management data analytical function (management data analytical function, MDAF) device, a cross-domain self-organization network function (self-organization network function, SON Function) device, a cross-domain intention management function device, a cross-domain management unit, a cross-domain management system, an end-to-end network management system, or the like. This is not specifically limited. For ease of description, the devices are each referred to as a cross-domain management device in embodiments of this application.

The cross-domain management device may provide one or more of the following management functions or management services: network life cycle management; network deployment; network fault management, including but not limited to fault collection, fault identification, root cause analysis, and fault handling; network performance management; network configuration management; network assurance; a network optimization function; network intention translation; and the like. The network herein may include one or more network elements or subnets (where the subnet is a network domain). Faults of the network include faults of all components in the network, for example, faults of components such as a subnet, a network element, a network function, a cell, a board, and a chip.

### (2) Domain management device

The domain management device may also be referred to as an equipment management system (equipment management system, EMS), a domain management function (domain management function, Domain-MnF) device, a subnet management device, a network element management device, a domain management unit, or a single-domain network management system. This is not specifically limited. For ease of description, the devices are each referred to as a domain management device in embodiments of this application.

The domain management device may provide one or more of the following management functions or management services: life cycle management of a subnet or a network element; deployment of a subnet or a network element; fault management of a subnet or a network element, including but not limited to fault collection, fault identification, root cause analysis, and fault handling; performance management of a subnet or a network element; assurance of a subnet or a network element; an optimization function of a subnet or a network element; and intention translation of a subnet or a network element. The subnet herein includes one or more network elements. The subnet may alternatively include a subnet, in other words, one or more subnets form a larger subnet. Faults of a subnet include faults of all components of the subnet, for example, faults of components such as a subnet, a network element, a network function, a cell board, and a chip.

For example, there may be a plurality of division manners for network domains managed by the plurality of domain management devices in FIG. 1. A possible division manner is to obtain a plurality of network domains through division based on network types, for example, an access network domain, a core network domain, and a transport network domain. The access network domain may also be referred to as a radio access network management domain (radio access network management domain, RAN MD), and a domain management device used to manage the access network domain may be referred to as an access network domain management device. The core network domain may also be referred to as a core network management domain (core network management domain, CN MD), and a domain management device used to manage the core network domain may be referred to as a core network domain management device. The transport network domain may also be referred to as a transport network management domain (transport network management domain, TN MD), and a domain management device used to manage the transport network domain may be referred to as a transport network domain management device. In another possible implementation, a plurality of network domains may be obtained through division based on administrative regions, for example, a network domain in Shanghai and a network domain in Beijing. A specific division manner of the network domains is not limited in embodiments of this application.

It may be understood that in embodiments of this application, an example in which one domain management device manages one network domain is used for description. In another possible implementation, one domain management device may manage two or more network domains. This is not specifically limited.

### (3) Network element

The network element may be an entity that provides a network service. For example, a core network domain may include one or more core network elements, and an access network domain may include one or more radio access network elements (which may also be referred to as access network elements) and the like. The core network element includes but is not limited to an access and mobility management function (access and mobility management function, AMF) network element, a session management function (session management function, SMF) network element, a policy control function (policy control function, PCF) network element, a network data analytical function (network data analytical function, NWDAF) network element, a network repository function (network repository function, NRF) network element, a gateway, and the like. The access network element includes but is not limited to access network elements in various communication standards, for example, a next generation NodeB (next generation NodeB, gNB) in an NR system, an evolved NodeB (evolved NodeB, eNB) in an LTE system, a radio network controller (radio network controller, RNC), or a NodeB (NodeB, NB), may be a transmission point in the NR system, or one antenna panel or a group of antenna panels (including a plurality of antenna panels) of a base station in the NR system, or may be a network node that forms a gNB or a transmission point, for example, a baseband device (BBU), or a DU in a central-distributed (central unit-distributed unit, CU-DU) architecture.

The network element may provide one or more of the following management functions or management services: network element life cycle management, network element deployment, network element fault management, network element performance management, network element assurance, a network element optimization function, network element intention translation, and the like. The network element fault management includes but is not limited to fault collection, fault identification, root cause analysis, and fault handling. Faults of the network element include faults of all components of the network element, for example, faults of components such as a network element, a network function, a cell board, and a chip.

It may be understood that the communication system shown in FIG. 1 may be a service-based management architecture, and the service-based management architecture may include a management service producer and a management service consumer. For example, when a management service is a service provided by the foregoing domain management device, the domain management device is the management service producer (management service producer, MnS producer), and a cross-domain management device is the management service consumer (management service consumer, MnS consumer). For another example, when a management service is a service provided by the foregoing network element, the network element is the management service producer, and a domain management device is the management service consumer. In addition, a quantity of domain management devices shown in FIG. 1 and a quantity of NFs in the network domain managed by the domain management device are merely examples. A specific quantity is not limited in embodiments of this application.

The following explains and describes related technical features in embodiments of this application. It should be noted that these explanations are intended to make embodiments of this application easier to understand, but should not be considered as a limitation on the protection scope claimed in this application.

### (1) Fault and abnormal event

A fault in embodiments of this application may be a fault that occurs in a network. For example, the fault indicates that an abnormal event occurs on a particular network element. For example, if an abnormal event "An AMF initial registration request abnormally decreases" occurs on an AMF-1, a corresponding fault is "An AMF-1 initial registration request abnormally decreases". For another example, if an abnormal event "The number of established SMF sessions abnormally decreases" occurs on an SMF-1, a corresponding fault is "The number of established SMF-1 sessions abnormally decreases". For another example, if an abnormal event "The number of timeouts of packet forwarding control protocol (packet forwarding control protocol, PFCP) session establishment responses for which the SMF waits abnormally increases" occurs on an SMF-1, a corresponding fault is "The number of timeouts of PFCP session establishment responses for which the SMF-1 waits abnormally increases".

The fault "An AMF-1 initial registration request abnormally decreases" is used as an example. A network element (to be specific, a network element on which the abnormal event occurs) corresponding to the fault is the AMF-1, and an abnormal event corresponding to the fault is "An AMF initial registration request abnormally decreases". Fault information of the fault may include an identifier of the network element (namely, the AMF-1) on which the abnormal event occurs and information about the abnormal event (to be specific, an AMF initial registration request abnormally decreases). Alternatively, fault information may include fault description information (for example, the fault description information is "The number of established SMF-1 sessions abnormally decreases"), and the fault description information may also be referred to as an identifier or a name of the fault. Optionally, the fault information further includes fault occurrence time information.

The abnormal event in embodiments of this application is an event different from a normal network behavior, and the abnormal event may also be briefly referred to as an event.

For example, a network element in each network domain may monitor an abnormal event. For example, the abnormal event may include: generating an alarm, an abnormal performance indicator, an abnormal log, generating an operation log, and the like. A network element in the first network domain is used as an example. After detecting an abnormal event, the network element in the first network domain may generate information about the abnormal event, and report the information about the abnormal event to the first domain management device, and optionally, further report occurrence time information of the abnormal event. The information about the abnormal event indicates the foregoing abnormal event, and the information about the abnormal event may include abnormality description information. For example, the information about the abnormal event may indicate an identifier of the abnormal event. Correspondingly, after receiving the information about the abnormal event, the first domain management device may determine, based on the information about the abnormal event and the network element (that is, a network element on which the abnormal event occurs) that reports the information about the abnormal event, that a fault occurs. Further, the first domain management device may store the information about the abnormal event, an identifier of the network element that reports the information about the abnormal event, and the fault occurrence time information. If the network element in the first network domain reports the occurrence time information of the abnormal event, the fault occurrence time information is the occurrence time information of the abnormal event. If the network element in the first network domain does not report the occurrence time information of the abnormal event, the fault occurrence time information may be considered as receiving time information of receiving the information about the abnormal event by the first domain management device.

For example, in an example in which the first network domain is a core network, network elements in the first network domain may include an AMF-1, an SMF-1, and the like. Table 1 is an example of a fault information table stored by the first domain management device.

**Table 1: Example of the fault information table stored by the first domain management device**

| Identifier of a network element | Information about an abnormal event | Fault occurrence time information |
|---|---|---|
| AMF-1 | AMF initial registration request abnormally decreases | YYYY-MM-DD 09:05:20 |
| SMF-1 | The number of established SMF sessions abnormally decreases | YYYY-MM-DD 09:06:30 |
| SMF-1 | The number of timeouts of PFCP session establishment responses for which the SMF waits abnormally increases | YYYY-MM-DD 09:05:50 |

### (2) Dependent event and dependent fault

An abnormal event A is used as an example. A dependent event of the abnormal event A is an event that may cause the abnormal event A. "Causing" may include "directly causing" and "indirectly causing". In embodiments of this application, an example in which "The dependent event of the abnormal event A is an event that may directly cause the abnormal event A" is used for description.

For example, an abnormal event C may directly cause an abnormal event B, and the abnormal event B may directly cause the abnormal event A. In other words, the abnormal event C may indirectly cause the abnormal event A. In this case, when "The dependent event of the abnormal event A is an event that may directly cause the abnormal event A", the abnormal event B is the dependent event of the abnormal event A, and the abnormal event C is not the dependent event of the abnormal event A. A dependency relationship between abnormal events may be preconfigured.

It is assumed that a fault A indicates that the abnormal event A occurs on a network element A, and a fault B indicates that the abnormal event B occurs on a network element B. If the abnormal event B is the dependent event of the abnormal event A and the network element B is an associated network element of the network element A, the fault B is a dependent fault of the fault A. An association relationship between network elements may be preconfigured, and the association relationship between the network elements may also be referred to as a topology relationship between the network elements.

### (3) Fault propagation chain and fault cause

The fault propagation chain may also be briefly referred to as a fault chain, and is a chain formed by a group of faults. Nodes in the fault propagation chain are faults. These faults have a causal relationship. A previous fault is a dependent fault of a next fault. A fault at a chain head may directly or indirectly cause a fault at a chain tail. There may be a plurality of forms of fault propagation chains. FIG. 2 shows an example of a fault propagation chain. In FIG. 2, a fault C is a dependent fault of a fault B, and the fault B is a dependent fault of a fault A.

A fault cause may be a cause or a root cause (namely, a fault root cause) that causes a series of faults, in other words, fault causes of the series of faults are the same. The series of faults may be faults located on a same fault propagation chain. For example, causes of the fault C, the fault B, and the fault Ain FIG. 2 are the same. Usually, after the fault cause is repaired or eliminated, the series of faults are rectified.

As described in the background, service performance is usually directly affected when a fault occurs in a network. Therefore, a fault cause needs to be located in a timely manner, to rectify the fault based on the fault cause. To locate the fault cause, the communication system shown in FIG. 1 is used as an example. In a possible implementation, a cross-domain management device collects fault information in each network domain, and then forms a fault propagation chain by using the fault information, to locate a fault cause.

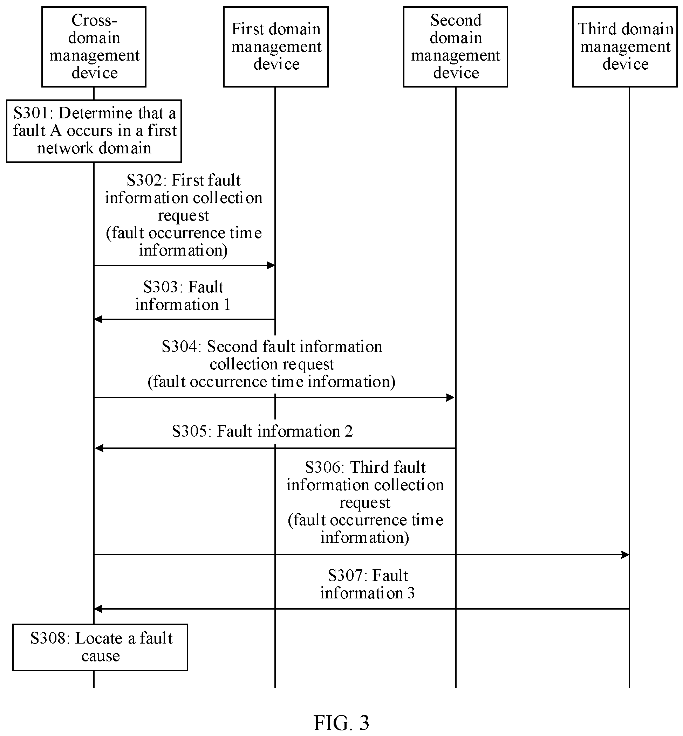

FIG. 3 is a schematic flowchart of locating a fault cause. As shown in FIG. 3, the procedure may include the following steps.

S301: A cross-domain management device determines that a fault A occurs in a first network domain.

Herein, there may be a plurality of implementations in which the cross-domain management device determines that the fault A occurs in the first network domain. For example, the cross-domain management device may monitor service data, and may further analyze, based on the service data, whether a fault occurs in each network domain. For another example, a first domain management device may receive information about an abnormal event reported by a network element, and may notify the cross-domain management device of the fault A after determining, based on the information about the abnormal event, that the fault A occurs. In this way, the cross-domain management device may determine that the fault A occurs in the first network domain.

For example, the first network domain is a core network domain, and the fault A may be that the number of established SMF-1 sessions abnormally decreases.

S302: The cross-domain management device sends a first fault information collection request to the first domain management device, where the first fault information collection request may include fault occurrence time information.

For example, the fault occurrence time information indicates occurrence time of the fault A. For example, the occurrence time of the fault A is YYYY-MM-DD 09:05:00.

S303: The first domain management device sends fault information 1 to the cross-domain management device based on the fault occurrence time information.

As shown above, the network element in the first network domain may report the information about the abnormal event to the first domain management device. Further, after receiving the first fault information collection request, the first domain management device may determine a time period (referred to as a time period 1) based on the fault occurrence time information, and send fault information (namely, fault information 1) of a plurality of faults whose fault occurrence time is within the time period 1 to the cross-domain management device.

For example, if the fault A occurs at YYYY-MM-DD 09:05:00, the time period 1 may be from YYYY-MM-DD 09:00:00 to YYYY-MM-DD 09:10:00.

S304: The cross-domain management device sends a second fault information collection request to a second domain management device, where the second fault information collection request may include the fault occurrence time information.

S305: The second domain management device sends fault information 2 to the cross-domain management device based on the fault occurrence time information.

Herein, for implementation of S305, refer to S303. Details are not described.

S306: The cross-domain management device sends a third fault information collection request to a third domain management device, where the third fault information collection request may include the fault occurrence time information.

S307: The third domain management device sends fault information 3 to the cross-domain management device based on the fault occurrence time information.

Herein, for implementation of S307, refer to S303. Details are not described.

S308: The cross-domain management device constructs a fault propagation chain based on the collected fault information, and locates a fault cause.

The foregoing method is used. When determining that the fault A occurs in the first network domain, the cross-domain management device needs to collect fault information of each network domain because a domain in which a fault cause of the fault A is located cannot be determined, to further analyze the fault cause. However, when a fault occurs in any domain, a series of fault information may be generated in each domain. A large amount of fault information causes a network management device to process a large amount of data when the network management device determines the fault cause, causing low efficiency of determining the fault cause.

Based on this, an embodiment of this application provides a method for locating a fault cause, to improve efficiency of locating the fault cause.

The following describes a communication method provided in embodiments of this application with reference to Embodiment 1 to Embodiment 4.

### Embodiment 1

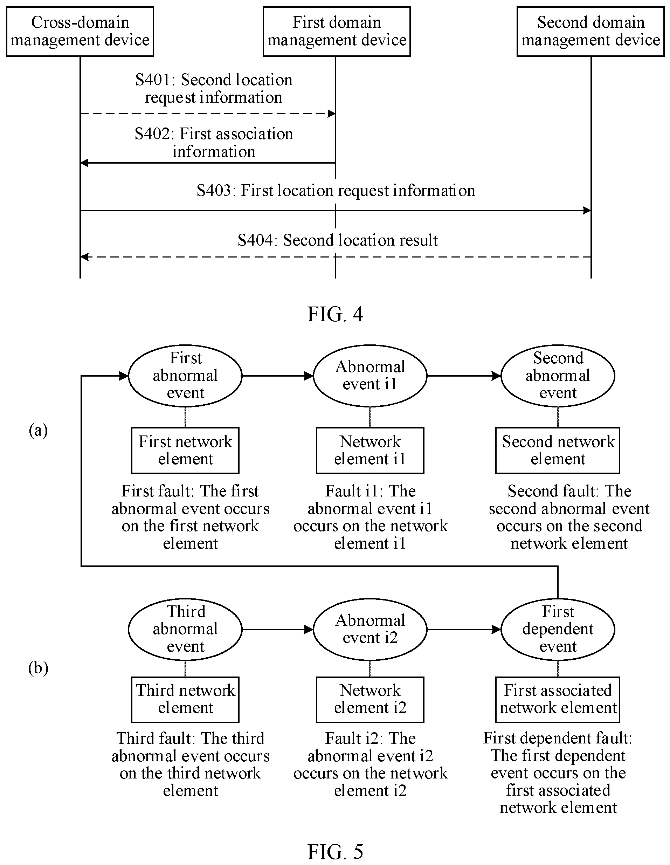

FIG. 4 is a schematic flowchart corresponding to a method for locating a fault cause according to Embodiment 1 of this application. As shown in FIG. 4, the method includes the following steps.

**S401:** A cross-domain management device sends second location request information to a first domain management device, where the second location request information is used to request to locate a fault cause of a second fault. Correspondingly, the first domain management device receives the second location request information.

For example, after determining that the second fault occurs in a first network domain, the cross-domain management device may send the second location request information to the first domain management device, where the second fault indicates that a second abnormal event occurs on a second network element in the first network domain. There may be a plurality of specific implementations in which the cross-domain management device determines that the second fault occurs in the first network domain. For example, the cross-domain management device may monitor service data, and analyze, based on the service data, whether a fault occurs in each network domain.

The second location request information may include fault information about the second fault. The fault information of the second fault may include an identifier of the second network element and information about the second abnormal event; or the fault information of the second fault may include an identifier or a name of the second fault, or fault description information. Optionally, the second location request information further includes fault occurrence time information, and the fault occurrence time information indicates occurrence time of the second fault.

**S402:** The first domain management device sends first association information to the cross-domain management device based on the second location request information. Correspondingly, after receiving the first association information, the cross-domain management device may determine, based on the first association information, that a dependent fault (referred to as a first dependent fault below for ease of description) of a first fault that occurs in the first network domain occurs in a second network domain. In other words, the first association information may be used to determine that the first dependent fault occurs in the second network domain.

Herein, the first fault and the second fault are located in a same fault propagation chain (to be specific, a fault propagation chain of the first network domain), the second fault is located at a chain tail of the fault propagation chain of the first network domain, and the first fault is located at a chain head of the fault propagation chain of the first network domain. The first fault may be a fault that directly causes the second fault, in other words, the first fault is a dependent fault of the second fault; or the first fault may be a fault that indirectly causes the second fault.

For example, after receiving the second location request information, the first domain management device may determine a first time period based on the fault occurrence time information, in other words, the fault occurrence time information may be used to determine the first time period. Further, the first domain management device obtains, through filtering based on the first time period, faults that occur in the first time period from a fault information table stored in the first domain management device, to further construct the fault propagation chain of the first network domain based on the faults, and obtain a first location result.

For example, (a) in FIG. 5 is an example of the fault propagation chain of the first network domain. As shown in (a) in FIG. 5, the fault propagation chain of the first network domain includes a first fault, a fault i1, and a second fault. The second fault is located at a chain tail of the fault propagation chain of the first network domain, and the first fault is located at a chain head of the fault propagation chain of the first network domain. In this case, the first fault may directly cause the fault i1, and indirectly cause the second fault. An abnormal event (namely, a first abnormal event) corresponding to the first fault may be referred to as a root node event of the fault propagation chain of the first network domain. It may be understood that, on the fault propagation chain of the first network domain, one or more faults may be included between the first fault and the second fault, or no other fault exists between the first fault and the second fault (in other words, the first fault directly causes the second fault). In (a) in FIG. 5, an example in which one fault (namely, the fault i1) is included between the first fault and the second fault is used for illustration.

### (1) Description of the first time period

For example, start time of the first time period may be corresponding time obtained by offsetting forward, by first duration, time indicated by the fault occurrence time information (namely, the occurrence time of the second fault), and end time of the first time period is corresponding time obtained by offsetting backward, by second duration, the time indicated by the fault occurrence time information. The first duration and the second duration may be the same or may be different. The first duration and the second duration may be predefined.

It may be understood that, if the second location request information includes the fault occurrence time information, the first domain management device may determine the first time period based on the time indicated by the fault occurrence time information; or if the fault information of the second fault does not include the fault occurrence time information, the first domain management device may use receiving time of the second location request information as fault occurrence time, to further determine the first time period based on the fault occurrence time.

### (2) Description of the first location result

The first location result may include any one of the following: the fault cause, the first association information, and first location failure information, where the first location failure information indicates that the fault cause is not located, and the first association information does not exist.

Specifically, if the first domain management device determines the fault cause based on the fault propagation chain, the first location result may include the fault cause; if the first domain management device does not determine the fault cause based on the fault propagation chain, but determines the first association information, the first location result may include the first association information; or if the first domain management device does not determine the fault cause, and the first association information does not exist, the first location result may include the first location failure information. In this embodiment of this application, an example in which the first location result includes the first association information is used for description.

### (3) Description of the first association information

As described above, the first association information is used to determine that the first dependent fault occurs in the second network domain. The first fault may indicate that the first abnormal event occurs on a first network element of the first network domain. The first dependent fault indicates that a dependent event (referred to as a first dependent event below for ease of description) of the first abnormal event occurs on an associated network element (referred to as a first associated network element below for ease of description) of the first network element. The first associated network element and the first network element satisfy a preset association relationship or a preset topology relationship. The first associated network element is a network element of the second network domain.

For example, after determining the first fault, the first domain management device may determine the first association information based on fault information of the first fault. For example, the first association information may include at least one of the following: information about the first abnormal event; information about the first dependent event; an identifier of the first network element; an identifier of the first associated network element; and an identifier of the first dependent fault. Optionally, the first association information further includes the fault occurrence time information, and the fault occurrence time information is used to determine the first time period.

The following describes, with reference to several possible cases (for example, Case A1 to Case A5), an implementation in which the cross-domain management device determines, based on the first association information, that the first dependent fault occurs in the second network domain.

Case A1: If the first association information includes the information about the first abnormal event, the cross-domain management device may determine the first dependent event based on a dependency relationship between abnormal events. If the first dependent event is an event that occurs in the second network domain, the cross-domain management device may determine that the first dependent fault occurs in the second network domain. In this case, after determining the first dependent event, the cross-domain management device may determine that the first dependent fault occurs in the second network domain even if the cross-domain management device does not know a specific network element on which the first dependent event occurs in the second network domain (in other words, the first dependent fault is not determined).

Case A2: If the first association information includes the information about the first dependent event, and the first dependent event is an event that occurs in the second network domain, the cross-domain management device may directly determine, based on the information about the first dependent event, that the first dependent fault occurs in the second network domain.

Case A3: If the first association information includes the identifier of the first network element, the cross-domain management device may determine the first associated network element based on association information between network elements. If the first associated network element is a network element in the second network domain, the cross-domain management device may determine that the first dependent fault occurs in the second network domain. In this case, after determining the first associated network element, the cross-domain management device may determine that the first dependent fault occurs in the second network domain even if the cross-domain management device does not know which abnormal event occurs on the first associated network element (in other words, the first dependent fault is not determined).

Case A4: If the first association information includes the identifier of the first associated network element, and the first associated network element is a network element in the second network domain, the cross-domain management device may directly determine, based on the identifier of the first associated network element, that the first dependent fault occurs in the second network domain.

Case A5: If the first association information includes the identifier of the first dependent fault, the cross-domain management device may directly determine, based on the identifier of the first dependent fault, that the first dependent fault occurs in the second network domain.

It may be understood that, for Case A1 and Case A2, in Case A2, the first domain management device may store a dependency relationship between abnormal events of a plurality of network domains, so that the first domain management device may determine the information about the first dependent event; in Case A1, the first domain management device does not need to store a dependency relationship between abnormal events of a plurality of network domains (where only a dependency relationship between abnormal events of the first network domain may be stored), but the cross-domain management device may store the dependency relationship between abnormal events of a plurality of network domains. For Case A3 and Case A4, in Case A4, the first domain management device may store an association relationship between network elements of a plurality of network domains, so that the first domain management device may determine the identifier of the first associated network element; in Case A3, the first domain management device does not need to store an association relationship between network elements of a plurality of network domains (where only an association relationship between network elements of the first network domain may be stored), but the cross-domain management device may store the association relationship between network elements of a plurality of network domains. For case A5: The first domain management device may store a dependency relationship between abnormal events of a plurality of network domains and an association relationship between network elements of the plurality of network domains, so that the first domain management device may determine the identifier of the first dependent fault.

In addition, for S401, it may be understood that S401 is an optional step, that is, the first domain management device may send the first association information to the cross-domain management device based on the second location request information. In this case, the cross-domain management device knows the fault occurrence time information because the cross-domain management device identifies the second fault. Therefore, the first association information (and second association information in the following) may not include the fault occurrence time information. Alternatively, in another possible embodiment, after identifying the second fault, the first domain management device may locate the fault cause of the second fault, and send the first association information to the cross-domain management device. In this case, the cross-domain management device may not know the fault occurrence time information because the first domain management device identifies the second fault. Therefore, the first association information may include the fault occurrence time information. Optionally, after the cross-domain management device obtains the fault occurrence time information from the first association information, the second association information in the following may not include the fault occurrence time information.

Optionally, in S401, the cross-domain management device may further send first indication information to the first domain management device, where the first indication information indicates to report the first association information when the fault cause is not located by the first domain management device. The second location request information and the first indication information may be carried in a same message, or may be carried in different messages. This is not specifically limited. In other words, the cross-domain management device may explicitly indicate, by using the first indication information, to report the first association information when the fault cause is not located by the first domain management device.

**S403:** The cross-domain management device sends the first location request information to the second domain management device based on the first association information, where the first location request information includes information used to determine the first dependent fault, and the first location request information is used to request to locate a fault cause of the first dependent fault.

Herein, the fault cause of the first dependent fault is the same as the fault cause of the second fault, that is, the fault causes are the same.

The first location request information may further include the fault occurrence time information, and the fault occurrence time information is used to determine the first time period.

For example, the information used to determine the first dependent fault may include at least one of the following: the information about the first abnormal event; the information about the dependent event; the identifier of the first network element; the identifier of the associated network element; and the identifier of the first dependent fault. It may be understood that the information used to determine the first dependent fault may be the same as or different from the first association information. For example, if the first association information includes the information about the first abnormal event, the information used to determine the first dependent fault may include the information about the first abnormal event, or may include the information about the first dependent event. For another example, if the first association information includes the identifier of the first network element, the information used to determine the first dependent fault may include the identifier of the first network element, or may include the identifier of the first associated network element.

The second domain management device may determine the first dependent fault based on the first location request information after receiving the first location request information. The following describes, with reference to several possible cases (for example, Case B1 to Case B4), an implementation in which the second domain management device determines the first dependent fault.

Case B1: The first location request information includes the information about the first abnormal event and the fault occurrence time information. The second domain management device may obtain, through filtering based on the fault occurrence time information, a plurality of faults (for example, a fault j1, a fault j2, and a fault j3) that occur in the first time period from a fault information table stored in the second domain management device; and then determine the information about the first dependent event based on the information about the first abnormal event, to further obtain, through filtering, a fault (for example, the fault j1) corresponding to the first dependent event from the plurality of faults, and use the fault j1 as the first dependent fault.

It may be understood that if the second domain management device selects two or more faults (for example, the fault j1 and the fault j2) from the plurality of faults, the second domain management device may select one of the faults (for example, the fault j1) as the first dependent fault. There may be a plurality of implementations in which the second domain management device selects one of the faults. For example, a fault whose occurrence time is close to the time indicated by the fault occurrence time information is used as the first dependent fault.

Case B2: The first location request information includes the information about the first dependent event and the fault occurrence time information. The second domain management device may obtain, through filtering based on the fault occurrence time information, a plurality of faults (for example, a fault j1, a fault j2, and a fault j3) that occur in the first time period from a fault information table stored in the second domain management device; and then obtain, through filtering based on the information about the first dependent event, a fault (for example, the fault j1) corresponding to the first dependent event from the plurality of faults, and use the fault j1 as the first dependent fault.

Case B3: The first location request information includes the identifier of the first network element and the fault occurrence time information. The second domain management device may obtain, through filtering based on the fault occurrence time information, a plurality of faults (for example, a fault j1, a fault j2, and a fault j3) that occur in the first time period from a fault information table stored in the second domain management device; and then determine the identifier of the first associated network element based on the identifier of the first network element, to further obtain, through filtering, a fault (for example, the fault j1) corresponding to the first associated network element from the plurality of faults, and use the fault j1 as the first dependent fault.

Case B4: The first location request information includes the identifier of the first associated network element and the fault occurrence time information. The second domain management device may obtain, through filtering based on the fault occurrence time information, a plurality of faults (for example, a fault j1, a fault j2, and a fault j3) that occur in the first time period from a fault information table stored in the second domain management device; and then obtain, through filtering based on the identifier of the first associated network element, a fault (for example, the fault j1) corresponding to the first associated network element from the plurality of faults, and use the fault j1 as the first dependent fault.

Further, after determining the first dependent fault, the second domain management device may construct a fault propagation chain of the second network domain based on the faults that occur in the first time period, and obtain a second location result. For example, (b) in FIG. 5 is an example of the fault propagation chain of the second network domain. As shown in (b) in FIG. 5, the fault propagation chain of the second network domain includes a third fault, a fault i2, and a first dependent fault, where the first dependent fault is located at a chain tail of the fault propagation chain of the second network domain, and the third fault is located at a chain head of the fault propagation chain of the second network domain. An abnormal event (namely, a third abnormal event) corresponding to the third fault may be referred to as a root node event of the fault propagation chain of the second network domain. It may be understood that, on the fault propagation chain of the second network domain, one or more faults may be included between the third fault and the first dependent fault, or no other fault exists between the third fault and the first dependent fault. In (b) in FIG. 5, an example in which one fault (namely, the fault i2) is included between the third fault and the first dependent fault is used for illustration.

The second location result may include any one of the following: the fault cause, the second association information, and second location failure information, where the second location failure information indicates that the fault cause is not located, and the second association information does not exist.

The second association information may be used to determine that a dependent fault (referred to as a second dependent fault) of the third fault occurs in a third network domain. The third fault may indicate that the third abnormal event occurs on a third network element of the second network domain. The second dependent fault indicates that a dependent event (referred to as a second dependent event) of the third abnormal event occurs on an associated network element (referred to as a second associated network element) of the third network element. The second associated network element and the third network element satisfy a preset association relationship or a preset topology relationship. The second associated network element is a network element of the third network domain.

For example, after determining the third fault, the second domain management device may determine the second association information based on fault information of the third fault. For example, the second association information may include at least one of the following: information about the third abnormal event; information about the second dependent event; an identifier of the third network element; and an identifier of the second associated network element. Optionally, the second association information further includes the fault occurrence time information, and the fault occurrence time information is used to determine the first time period.

Optionally, in S403, the cross-domain management device may further send second indication information to the second domain management device, where the second indication information indicates to report the second association information when the fault cause is not located by the second domain management device.

Optionally, the foregoing method further includes the following step.

**S404:** The second domain management device sends the second location result to the cross-domain management device, and correspondingly, the cross-domain management device receives the second location result.

For example, if the second location result includes the fault cause, the cross-domain management device may obtain the fault cause and end the procedure. The cross-domain management device may start a manual service if the second location result includes the second location failure information. If the second location result includes the second association information, the cross-domain management device may send third location request information to a third domain management device, where the third location request information is used to request to locate a fault cause of the second dependent fault, and the third location request information includes information used to determine the second dependent fault. For specific implementation, refer to S403. It may be understood that the third domain management device may return third association information if the third domain management device also does not determine the fault cause, that is, there may be a plurality of times of iterations.

The foregoing method is used, so that the first domain management device may send the first association information to the cross-domain management device, and the cross-domain management device determines, based on the first association information, that the dependent fault of the first fault that occurs in the first network domain occurs in the second network domain, and sends location request information to the second domain management device in a targeted manner. In this way, the first association information may associate faults in different domains, so that precise cross-domain fault cause location can be implemented. Compared with a manner in which the cross-domain management device locates a fault cause based on fault information reported by each domain management device, this can effectively improve efficiency of locating the fault cause. In addition, a large quantity of fault propagation chains and fault root causes may be associated when the cross-domain management device locates a fault cause based on fault information reported by each domain management device, and consequently, to determine a correct root cause of a fault is difficult, and fault location may be inaccurate. However, in this application, the second domain management device locates the fault cause based on the dependent fault. This is strongly targeted. In this way, a large quantity of fault propagation chains may not be associated, thereby improving location accuracy.

Based on the description of Embodiment 1, the following describes several possible implementation procedures with reference to Embodiment 2 to Embodiment 4.

### Embodiment 2

In Embodiment 2, an example in which the first association information includes the information about the first dependent event and the identifier of the first network element is used for description.

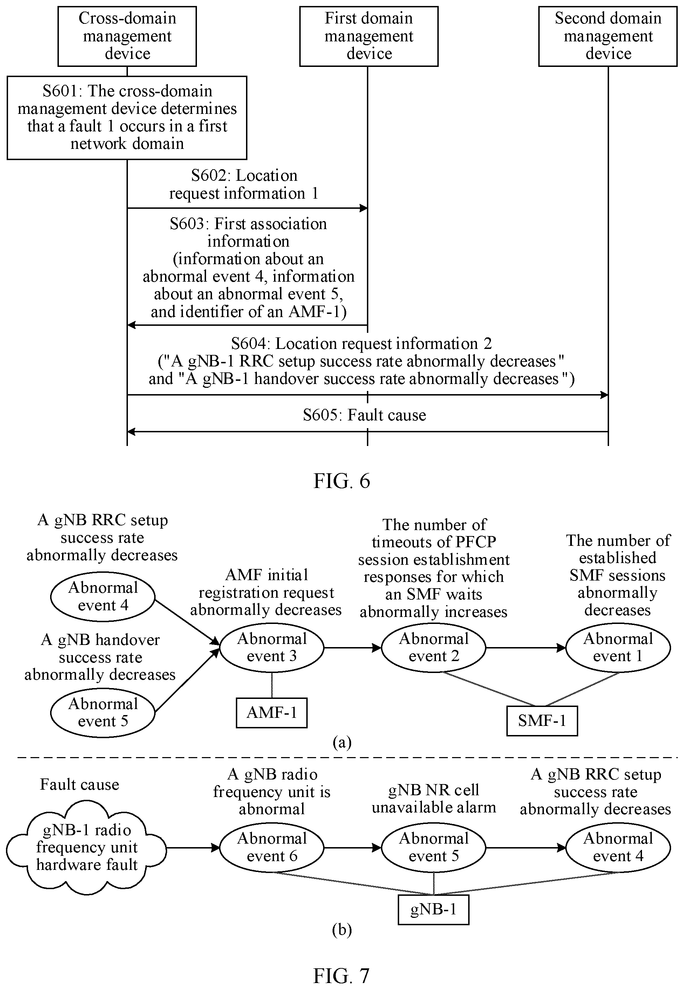

FIG. 6 is a schematic flowchart corresponding to a method for locating a fault cause according to Embodiment 2 of this application. As shown in FIG. 6, the method includes the following steps.

S601: A cross-domain management device determines that a fault 1 occurs in a first network domain.

For example, the first network domain is a core network domain, and the fault 1 is "An SMF-1 session establishment success rate abnormally decreases".

S602: The cross-domain management device sends location request information 1 to a first domain management device, where the location request information 1 is used to request to locate a fault cause of the fault 1. Correspondingly, the first domain management device receives the location request information 1.

Herein, the location request information 1 may include fault description information (to be specific, "An SMF-1 session establishment success rate abnormally decreases") of the fault 1, and may further include fault occurrence time information.

S603: The first domain management device locates the fault cause based on the location request information 1, obtains a first location result, where the first location result includes first association information, and sends the first association information to the cross-domain management device.

For example, the first domain management device constructs a fault propagation chain of the first network domain based on the location request information 1. As shown in FIG. 7, the fault propagation chain of the first network domain includes: "An AMF-1 initial registration request abnormally decreases" (to be specific, an abnormal event 3 occurs on an AMF-1, and the abnormal event 3 is that an AMF initial registration request abnormally decreases), "The number of timeouts of PFCP session establishment responses for which an SMF-1 waits abnormally increases" (to be specific, an abnormal event 2 occurs on the SMF-1, and the abnormal event 2 is that the number of timeouts of PFCP session establishment responses for which an SMF waits abnormally increases), and "The number of established SMF-1 sessions abnormally decreases" (to be specific, an abnormal event 1 occurs on the SMF-1, and the abnormal event 1 is that the number of established SMF sessions abnormally decreases). Further, the first domain management device may determine a dependent event of the abnormal event 3. For example, the dependent event of the abnormal event 3 includes an abnormal event 4 and an abnormal event 5. The abnormal event 4 is that a gNB radio resource control (radio resource control, RRC) setup success rate abnormally decreases, and the abnormal event 5 is that a gNB handover success rate abnormally decreases.

The first association information may include information about the abnormal event 4, information about the abnormal event 5, and an identifier of the AMF-1.

**S604:** The cross-domain management device sends location request information 2 to a second domain management device after receiving the first association information.

Herein, the cross-domain management device may determine an associated network element of the AMF-1 based on the identifier that is of the AMF-1 and that is included in the first association information. For example, the associated network element of the AMF-1 is a gNB-1. The location request information 2 may include the information about the abnormal event 4, the information about the abnormal event 5, and an identifier of the gNB-1, and optionally, further include the fault occurrence time information.

Alternatively, after determining that the associated network element of the AMF-1 is the gNB-1, the cross-domain management device may combine the gNB-1, the abnormal event 4, and the abnormal event 5 into fault description information, for example, "A gNB-1 RRC setup success rate abnormally decreases" and "A gNB-1 handover success rate abnormally decreases". The location request information 2 may carry "A gNB-1 RRC setup success rate abnormally decreases" and "A gNB-1 handover success rate abnormally decreases".

S605: The second domain management device locates the fault cause based on the location request information 2, obtains a second location result, where the second location result includes the fault cause, and sends the fault cause to the cross-domain management device.

For example, if determining, based on the fault occurrence time information, that "A gNB-1 RRC setup success rate abnormally decreases" occurs (but "A gNB-1 handover success rate abnormally decreases" does not occur) in a second network domain in a first time period, the second domain management device may construct a fault propagation chain of the second network domain. As shown in (b) in FIG. 7, the fault propagation chain of the second network domain includes: "A gNB-1 RRC setup success rate abnormally decreases" (to be specific, an abnormal event 4 occurs on a gNB-1, and the abnormal event 4 is that a gNB RRC setup success rate abnormally decreases), "A gNB-1 NR cell unavailable alarm occurs" (to be specific, an abnormal event 5 occurs on the gNB-1, and the abnormal event 5 is that a gNB NR cell unavailable alarm occurs), and "A gNB-1 radio frequency unit is abnormal", (to be specific, an abnormal event 6 occurs on the gNB-1, and the abnormal event 6 is that a gNB radio frequency unit is abnormal). Further, the second domain management device may analyze, based on "A gNB-1 radio frequency unit is abnormal", that the fault cause is "a gNB-1 radio frequency unit hardware fault", and send the fault cause to the cross-domain management device.

### Embodiment 3

In Embodiment 3, an example in which the first association information includes the information about the first abnormal event and the identifier of the first network element is used for description.

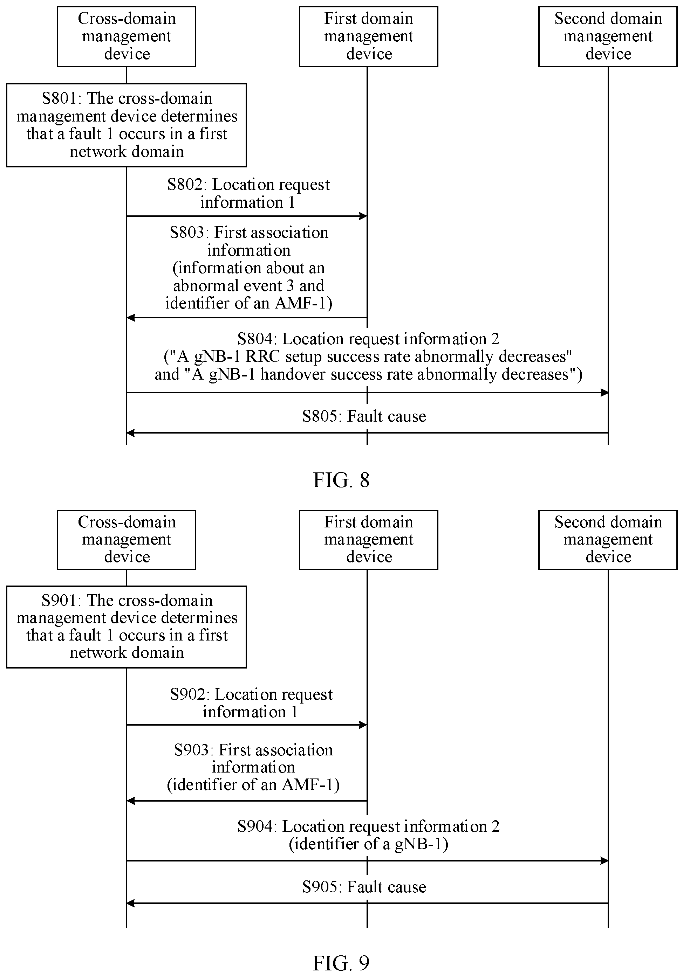

FIG. 8 is a schematic flowchart corresponding to a method for locating a fault cause according to Embodiment 3 of this application. As shown in FIG. 8, the method includes the following steps.

**S801:** A cross-domain management device determines that a fault 1 occurs in a first network domain.

For example, the first network domain is a core network domain, and the fault 1 is "An SMF-1 session establishment success rate abnormally decreases".

**S802:** The cross-domain management device sends location request information 1 to a first domain management device, where the location request information 1 is used to request to locate a fault cause of the fault 1. Correspondingly, the first domain management device receives the location request information 1.

Herein, the location request information 1 may include fault description information (to be specific, "An SMF-1 session establishment success rate abnormally decreases") of the fault 1, and may further include fault occurrence time information.

**S803:** The first domain management device locates the fault cause based on the location request information 1, obtains a first location result, where the first location result includes first association information, and sends the first association information to the cross-domain management device.

For example, the first domain management device constructs a fault propagation chain of the first network domain based on the location request information 1. As shown in FIG. 7, the fault propagation chain of the first network domain includes: "An AMF-1 initial registration request abnormally decreases" (to be specific, an abnormal event 3 occurs on an AMF-1, and the abnormal event 3 is that an AMF initial registration request abnormally decreases), "The number of timeouts of PFCP session establishment responses for which an SMF-1 waits abnormally increases" (to be specific, an abnormal event 2 occurs on the SMF-1, and the abnormal event 2 is that the number of timeouts of PFCP session establishment responses for which an SMF waits abnormally increases), and "The number of established SMF-1 sessions abnormally decreases" (to be specific, an abnormal event 1 occurs on the SMF-1, and the abnormal event 1 is that the number of established SMF sessions abnormally decreases).

The first association information may include information about the abnormal event 3 and an identifier of the AMF-1.

**S804:** The cross-domain management device sends location request information 2 to the second domain management device after receiving the first association information.

Herein, the cross-domain management device may determine an associated network element of the AMF-1 based on the identifier that is of the AMF-1 and that is included in the first association information, where for example, the associated network element of the AMF-1 is a gNB-1; and determine a dependent event of the abnormal event 3 based on the information about the abnormal event 3 included in the first association information, where for example, dependent events of the abnormal event 3 are an abnormal event 4 and an abnormal event 5. The location request information 2 may include the information about the abnormal event 4, the information about the abnormal event 5, and an identifier of the gNB-1, and optionally, further include the fault occurrence time information.

Alternatively, the cross-domain management device may combine the gNB-1, the abnormal event 4, and the abnormal event 5 into fault description information, for example, "A gNB-1 RRC setup success rate abnormally decreases" and "A gNB-1 handover success rate abnormally decreases". The location request information 2 may carry "A gNB-1 RRC setup success rate abnormally decreases" and "A gNB-1 handover success rate abnormally decreases".

**S805:** The second domain management device locates the fault cause based on the location request information 2, obtains a second location result, where the second location result includes the fault cause, and sends the fault cause to the cross-domain management device.

For example, for specific implementation of S805, refer to the description of S605 in Embodiment 2. Details are not described.

### Embodiment 4

In Embodiment 4, an example in which the first association information includes the identifier of the first network element is used for description.

FIG. 9 is a schematic flowchart corresponding to a method for locating a fault cause according to Embodiment 4 of this application. As shown in FIG. 9, the method includes the following steps.

**S901:** A cross-domain management device determines that a fault 1 occurs in a first network domain.

For example, the first network domain is a core network domain, and the fault 1 is "An SMF-1 session establishment success rate abnormally decreases".

**S902:** The cross-domain management device sends location request information 1 to a first domain management device, where the location request information 1 is used to request to locate a fault cause of the fault 1. Correspondingly, the first domain management device receives the location request information 1.

Herein, the location request information 1 may include fault description information (to be specific, "An SMF-1 session establishment success rate abnormally decreases") of the fault 1, and may further include fault occurrence time information.

**S903:** The first domain management device locates the fault cause based on the location request information 1, obtains a first location result, where the first location result includes first association information, and sends the first association information to the cross-domain management device.

For example, the first domain management device constructs a fault propagation chain of the first network domain based on the location request information 1. As shown in FIG. 7, the fault propagation chain of the first network domain includes: "An AMF-1 initial registration request abnormally decreases" (to be specific, an abnormal event 3 occurs on an AMF-1, and the abnormal event 3 is that an AMF initial registration request abnormally decreases), "The number of timeouts of PFCP session establishment responses for which an SMF-1 waits abnormally increases" (to be specific, an abnormal event 2 occurs on the SMF-1, and the abnormal event 2 is that the number of timeouts of PFCP session establishment responses for which an SMF waits abnormally increases), and "The number of established SMF-1 sessions abnormally decreases" (to be specific, an abnormal event 1 occurs on the SMF-1, and the abnormal event 1 is that the number of established SMF sessions abnormally decreases).

The first association information may include an identifier of the AMF-1.

**S904:** The cross-domain management device sends location request information 2 to a second domain management device after receiving the first association information.

Herein, the cross-domain management device may determine associated network elements of the AMF-1 based on the identifier that is of the AMF-1 and that is included in the first association information. For example, the associated network elements of the AMF-1 are a gNB-1 and a gNB-2. The location request information 2 may include an identifier of the gNB-1, and optionally, further include the fault occurrence time information.

**S905:** The second domain management device locates the fault cause based on the location request information 2, obtains a second location result, where the second location result includes the fault cause, and sends the fault cause to the cross-domain management device.

Herein, the second domain management device determines, based on the fault occurrence time information, an abnormal event that occurs on the gNB-1 and an abnormal event that occurs on the gNB-2 in a first time period. For example, if an abnormal event 4 occurs on the gNB-1 in the first time period, and no abnormal event occurs on the gNB-2 in the first time period, the second domain management device may determine that a first dependent fault is "A gNB-1 RRC setup success rate abnormally decreases", and construct a fault propagation chain of a second network domain, to obtain the fault cause. Refer to (b) in FIG. 7. For example, if the abnormal event 4 occurs on the gNB-1 in the first time period, and an abnormal event also occurs on the gNB-2 in the first time period, that is, a plurality of faults occur, the second domain management device may select one of the faults as the first dependent fault. For details, refer to the description in Embodiment 1.

For Embodiment 1 to Embodiment 4, it may be understood that:
(1) The foregoing focuses on differences between different embodiments in Embodiment 1 to Embodiment 4, and content other than the differences may be mutually referenced in Embodiment 1 to Embodiment 4. In addition, in a same embodiment, different implementations or different examples may also be mutually referenced.
(2) Step numbers in the flowcharts described in Embodiment 1 to Embodiment 4 are merely examples of executing procedures and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts based on an actual requirement, or another possible step may be added to the flowcharts based on an actual requirement.

The solutions provided in embodiments of this application are mainly described above from a perspective of interaction between the devices. It may be understood that, to implement the foregoing functions, the cross-domain management device and the domain management device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the cross-domain management device and the domain management device may be divided into functional modules or units based on the foregoing method examples. For example, each functional module or unit may be obtained through division based on each corresponding function, or two or more functions may be integrated into one module or unit. The integrated module or unit may be implemented in a form of hardware, or may be implemented in a form of a software functional module or unit.

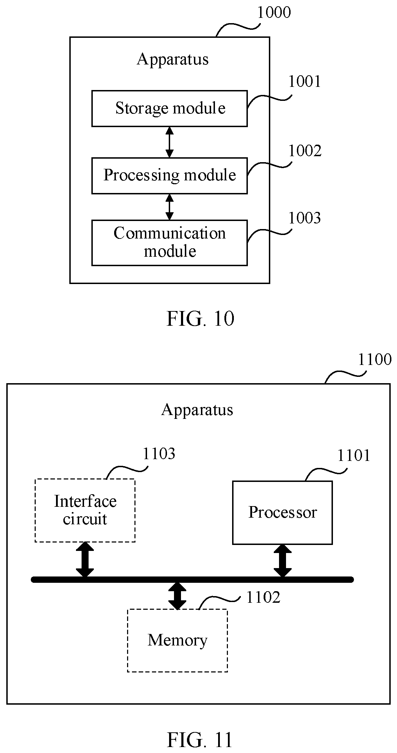

When an integrated unit is used, FIG. 10 is a possible example block diagram of an apparatus 1000 according to an embodiment of this application. As shown in FIG. 10, the apparatus 1000 may include a processing module 1002 and a communication module 1003. The processing module 1002 is configured to control and manage an action of the apparatus 1000. The communication module 1003 is configured to support communication between the apparatus 1000 and another device. Optionally, the communication module 1003 is also referred to as a transceiver module, and may include a receiving module and/or a sending module, which are respectively configured to perform a receiving operation and a sending operation. The apparatus 1000 may further include a storage module 1001, configured to store program code and/or data of the apparatus 1000.
(1) The apparatus 1000 may be the cross-domain management device in the foregoing embodiments. The processing module 1002 may support the apparatus 1000 in performing the actions of the cross-domain management device in the foregoing method examples. Alternatively, the processing module 1002 mainly performs internal actions of the cross-domain management device in the method examples, and the communication module 1003 may support communication between the apparatus 1000 and another entity.

Specifically, in an embodiment, the communication module 1003 is configured to receive first association information from a first domain management device, where the first association information is used to determine that a dependent fault of a first fault that occurs in a first network domain occurs in a second network domain, and the first domain management device is a management device of the first network domain; and send first location request information to a second domain management device based on the first association information, where the first location request information includes information used to determine the dependent fault, the first location request information is used to request to locate a fault cause of the dependent fault, and the second domain management device is a management device of the second network domain. For more detailed descriptions of the processing module 1002 and the communication module 1003, directly refer to related descriptions in the foregoing method embodiments. Details are not described herein.

(2) The apparatus 1000 may be the domain management device in the foregoing embodiments. The processing module 1002 may support the apparatus 1000 in performing the actions of the domain management device in the foregoing method examples. Alternatively, the processing module 1002 mainly performs internal actions of the domain management device in the method examples, and the communication module 1003 may support communication between the apparatus 1000 and another entity.

Specifically, in an embodiment, the processing module 1002 is configured to determine first association information; and the communication module 1003 is configured to send the first association information to a cross-domain management device, where the first association information is used to determine that a dependent fault of a first fault that occurs in a first network domain occurs in a second network domain, so that the cross-domain management device sends first location request information to a second domain management device, where the first location request information includes information used to determine the dependent fault, the first location request information is used to request to locate a fault cause of the dependent fault, and the second domain management device is a management device of the second network domain. For more detailed descriptions of the processing module 1002 and the communication module 1003, directly refer to related descriptions in the foregoing method embodiments. Details are not described herein.

Division of the modules in the apparatus is merely division of logical functions. During actual implementation, all or some of the modules may be integrated into one physical entity, or may be physically separated. In addition, all the modules in the apparatus may be implemented in a form of software invoked by a processing element, or may be implemented in a form of hardware; or some modules may be implemented in a form of software invoked by a processing element, and some modules may be implemented in a form of hardware. For example, each module may be a separately disposed processing element, or may be integrated into a chip of the apparatus for implementation. In addition, each module may alternatively be stored in a memory in a form of a program to be invoked by a processing element of the apparatus to perform a function of the module. In addition, all or some of the modules may be integrated together, or may be implemented independently. The processing element herein may also be referred to as a processor, and may be an integrated circuit having a signal processing capability. In an implementation process, the steps of the foregoing methods or the foregoing modules may be implemented by using a hardware integrated logic circuit in the processor element, or may be implemented in a form of software invoked by the processing element.

In an example, the module in any one of the foregoing apparatuses may be one or more integrated circuits configured to implement the foregoing methods, for example, one or more application-specific integrated circuits (Application-Specific Integrated Circuits, ASICs), one or more microprocessors (digital signal processors, DSPs), one or more field programmable gate arrays (Field Programmable Gate Arrays, FPGAs), or a combination of at least two types of these forms of integrated circuits. For another example, when the module in the apparatus may be implemented in a form in which a processing element schedules a program, the processing element may be a processor, for example, a general-purpose central processing unit (central processing unit, CPU) or another processor that can invoke the program. For another example, these modules may be integrated together and implemented in a form of system-on-a-chip (system-on-a-chip, SoC).

The foregoing module configured to perform receiving is an interface circuit of the apparatus, and is configured to receive a signal from another apparatus. For example, when the apparatus is implemented in a manner of a chip, the receiving module is an interface circuit that is of the chip and that is configured to receive a signal from another chip or apparatus. The foregoing module configured to perform sending is an interface circuit of the apparatus, and is configured to send a signal to another apparatus. For example, when the apparatus is implemented in a manner of a chip, the sending module is an interface circuit that is of the chip and that is configured to send a signal to another chip or apparatus.

FIG. 11 is a diagram of a structure of an apparatus 1100 according to an embodiment of this application. The apparatus 1100 may be the cross-domain management device or the domain management device in the foregoing embodiments, and is configured to implement a function of the cross-domain management device or the domain management device in the foregoing embodiments.

As shown in FIG. 11, the apparatus 1100 may include a processor 1101, a memory 1102, and an interface circuit 1103. The processor 1101 may be configured to process a communication protocol and communication data, and control the apparatus 1100. The memory 1102 may be configured to store a program and data, and the processor 1101 may perform, based on the program, the method performed by the apparatus 1100 in embodiments of this application. The interface circuit 1103 may be used by the apparatus 1100 to communicate with another device. The communication may be wired communication or wireless communication. The interface circuit may be a service-based interface.

Alternatively, the memory 1102 may be externally connected to the apparatus 1100. In this case, the apparatus 1100 may include an interface circuit 1103 and a processor 1101. Alternatively, the interface circuit 1103 may be externally connected to the apparatus 1100. In this case, the apparatus 1100 may include a memory 1102 and a processor 1101. When both the interface circuit 1103 and the memory 1102 are externally connected to the apparatus 1100, the apparatus 1100 may include a processor 1101.

The apparatus 1100 shown in FIG. 11 can implement processes of the apparatus 1100 in the foregoing method embodiments. Operations and/or functions of modules in the apparatus 1100 shown in FIG. 11 are separately used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. A term "and/or" describes an association relationship of associated objects, and indicates that three relationships may exist. For example, A and/or B may indicate the following three cases: Only A exists, both A and B exist, and only B exists, where A and B may be singular or plural. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of a hardware only embodiment, a software only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. Computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for locating a fault cause, wherein the method is applied to a cross-domain management device, and the method comprises:
receiving first association information from a first domain management device, wherein the first association information is used to determine that a dependent fault of a first fault that occurs in a first network domain occurs in a second network domain, and the first domain management device is a management device of the first network domain; and
sending first location request information to a second domain management device based on the first association information, wherein the first location request information comprises information used to determine the dependent fault, the first location request information is used to request to locate a fault cause of the dependent fault, and the second domain management device is a management device of the second network domain.

2. The method according to claim 1, wherein the method further comprises:
sending second location request information to the first domain management device, wherein the second location request information is used to request to locate the fault cause.

3. The method according to claim 2, wherein the second location request information comprises an identifier of a second fault that occurs in the first network domain; and
the first fault and the second fault are located in a same fault propagation chain.

4. The method according to claim 3, wherein the second location request information further comprises fault occurrence time information; and
the fault occurrence time information is used to determine a first time period, and the first fault is a fault that occurs in the first time period.

5. The method according to any one of claims 2 to 4, wherein the method further comprises:
sending first indication information to the first domain management device, wherein the first indication information indicates to report the first association information when the fault cause is not located by the first domain management device.

6. The method according to any one of claims 1 to 5, wherein the method further comprises:
sending second indication information to the second domain management device, wherein the second indication information indicates to report second association information when the fault cause is not located by the second domain management device.

7. The method according to any one of claims 1 to 6, wherein the method further comprises: receiving a location result from the second domain management device, wherein
the location result comprises any one of the following:
the fault cause;
the second association information; and
location failure information, wherein the location failure information indicates that the fault cause is not located, and the second association information does not exist.

8. The method according to any one of claims 1 to 7, wherein
the first fault indicates that a first abnormal event occurs on a first network element of the first network domain; and
the dependent fault indicates that a dependent event of the first abnormal event occurs on an associated network element of the first network element, and the associated network element is a network element of the second network domain.

9. The method according to claim 8, wherein the first association information comprises at least one of the following:
information about the first abnormal event;
information about the dependent event;
an identifier of the first network element;
an identifier of the associated network element; and
an identifier of the dependent fault.

10. The method according to claim 8 or 9, wherein the first location request information comprises at least one of the following:
the information about the first abnormal event;
the information about the dependent event;
the identifier of the first network element;
the identifier of the associated network element; and
the identifier of the dependent fault.

11. A method for locating a fault cause, wherein the method is applied to a first domain management device, the first domain management device is a management device of a first network domain, and the method comprises:
determining first association information;
sending the first association information to a cross-domain management device, wherein the first association information is used to determine that a dependent fault of a first fault that occurs in the first network domain occurs in a second network domain, so that the cross-domain management device sends first location request information to a second domain management device, wherein
the first location request information comprises information used to determine the dependent fault, the first location request information is used to request to locate a fault cause of the dependent fault, and the second domain management device is a management device of the second network domain.

12. The method according to claim 11, wherein the method further comprises:
receiving second location request information from the cross-domain management device, wherein the second location request information is used to request to locate the fault cause.

13. The method according to claim 12, wherein the second location request information comprises an identifier of a second fault that occurs in the first network domain; and
the first fault and the second fault are located in a same fault propagation chain.

14. The method according to claim 13, wherein the second location request information further comprises fault occurrence time information; and
the fault occurrence time information is used to determine a first time period, and the first fault is a fault that occurs in the first time period.

15. The method according to any one of claims 12 to 14, wherein the method further comprises:
receiving first indication information from the cross-domain management device, wherein the first indication information indicates to report the first association information when the fault cause is not located by the first domain management device.

16. The method according to any one of claims 11 to 15, wherein
the first fault indicates that a first abnormal event occurs on a first network element of the first network domain; and
the dependent fault indicates that a dependent event of the first abnormal event occurs on an associated network element of the first network element, and the associated network element is a network element of the second network domain.

17. The method according to claim 16, wherein the first association information comprises at least one of the following:
information about the first abnormal event;
information about the dependent event;
an identifier of the first network element;
an identifier of the associated network element; and
an identifier of the dependent fault.

18. A system for locating a fault cause, wherein the system comprises a cross-domain management device, a first domain management device, and a second domain management device, wherein
the first domain management device is configured to send first association information to the cross-domain management device, wherein the first association information is used to determine that a dependent fault of a first fault that occurs in a first network domain occurs in a second network domain, and the first domain management device is a management device of the first network domain;
the cross-domain management device is configured to receive the first association information, and send first location request information to the second domain management device based on the first association information, wherein the first location request information comprises information used to determine the dependent fault, the first location request information is used to request to locate a fault cause of the dependent fault, and the second domain management device is a management device of the second network domain; and
the second domain management device is configured to receive the first location request information, and send a location result to the cross-domain management device based on the first location request information.

19. A cross-domain management device, comprising a module configured to perform the method according to any one of claims 1 to 10.

20. A domain management device, comprising a module configured to perform the method according to any one of claims 11 to 17.

21. A cross-domain management device, comprising a processor, wherein the processor is coupled to a memory, and the memory stores a computer program; and the processor is configured to invoke the computer program in the memory, to enable the cross-domain management device to perform the method according to any one of claims 1 to 10.

22. A domain management device, comprising a processor, wherein the processor is coupled to a memory, and the memory stores a computer program; and the processor is configured to invoke the computer program in the memory, to enable the domain management device to perform the method according to any one of claims 11 to 17.

23. A computer-readable storage medium, wherein the storage medium stores a computer program or instructions, and when the computer program or the instructions is/are executed by a computer, the method according to any one of claims 1 to 10 or the method according to any one of claims 11 to 17 is implemented.

24. A computer program product, wherein when a computer reads and executes the computer program product, the computer is enabled to perform the method according to any one of claims 1 to 10 or the method according to any one of claims 11 to 17.
